Europäisches Patentamt

European Patent Office

Office européen des brevets

(19)

(11) Veröffentlichungsnummer: **0 012 174**
**B1**

(12) **EUROPÄISCHE PATENTSCHRIFT**

(45) Veröffentlichungstag der Patentschrift:
21.04.82

(51) Int. Cl.³: **G 03 B 27/73**, G 01 J 1/42

(21) Anmeldenummer: **79103933.2**

(22) Anmeldetag: **12.10.79**

(54) **Lichtmessgerät.**

(30) Priorität: **01.12.78 IT 487978**

(43) Veröffentlichungstag der Anmeldung:
**25.06.80 Patentblatt 80/13**

(45) Bekanntmachung des Hinweises auf die Patenterteilung:
**21.04.82 Patentblatt 82/16**

(84) Benannte Vertragsstaaten:
**CH DE FR GB**

(56) Entgegenhaltungen:
**US-A-3 067 649**

(73) Patentinhaber: **Durst AG Fabrik Fototechnischer Apparate, Gerbergasse 58, I-39100 Bozen (IT)**

(72) Erfinder: **Obertegger, Franz, Sarnserstrasse 1, I-39042 Brixen-Milland (IT)**

(74) Vertreter: **Kapfinger, Wolfgang, c/o DURST AG Fabrik Fototechnischer Apparate Köstlanstrasse 12, I-39042 Brixen (BZ) (IT)**

BUNDESDRUCKEREI BERLIN

## Lichtmeßgerät

Die Erfindung betrifft ein Lichtmeßgerät mit einer Schaltungsanordnung zur Berücksichtigung von Meßfehlern und einer Licht-Abschirmvorrichtung für einen lichtelektrischen Wandler.

Aus der DE-A-2 331 191 und DE-A-2 353 518 sind Lichtmeßgeräte mit einer Schaltungsanordnung zur automatischen Korrektur von Nullpunktfehlern bekannt, bei denen der Meßvorgang in zwei Phasen aufgeteilt ist. In einer ersten Phase wird ein zur Lichtmessung eingesetzter lichtelektrischer Wandler vom einfallenden Licht durch eine Licht-Abschirmvorrichtung abgeschirmt und das dabei entstehende Signal durch entsprechende schaltungstechnische Maßnahmen gespeichert. In einer zweiten Phase wird der lichtelektrische Wandler dem Meßlicht ausgesetzt; vom dabei entstehenden Meßsignal wird das in der vorherigen Phase gespeicherte Signal abgezogen und somit ein von einem Nullpunktfehler weitgehend befreites Signal erhalten. Die Licht-Abschirmvorrichtung besteht dabei aus einer Blendenlamelle, die durch einen Elektromotor periodisch in den Strahlengang des Meßlichtes vor den lichtelektrischen Wandler eingeführt und dann wieder aus diesem entfernt wird. Bei einem bekannten Gerät, das sich des erwähnten Meßprinzips bedient, erfolgt die Bewegung der Blendenlamelle mit einer Frequenz von etwa 1 Hz. Dabei hat die Abschirmphase eine Zeitdauer von etwa 0,4 s, während der das Fehlersignal gespeichert werden kann.

Soll ein Lichtmeßgerät der eingangs genannten Art zur Erhöhung der Handlichkeit durch die Energie einer Batterie betrieben werden, besteht eine Hauptforderung darin, daß der Stromverbrauch möglichst gering bleibt. Dabei liegt es nahe, die Licht-Abschirmvorrichtung von Hand zu betreiben, da der oben erwähnte Elektromotor zum Antrieb der Blendenlamelle einen im Verhältnis zur Meßschaltung hohen Strombedarf hat. Bei manuellem Betrieb der Licht-Abschirmvorrichtung ist zu beachten, daß die Abschirmphase eine gewisse Zeitdauer nicht unterschreiten darf, da die Einschwingvorgänge der Meßanordnung berücksichtigt werden müssen. Die für eine bestimmte Schaltungsanordnung nach den erwähnten Offenlegungsschriften geringste zulässige Zeit, während der der lichtelektrische Wandler vom Lichteinfall abgeschirmt sein muß, beträgt etwa 150 ms. Wird diese Zeit unterschritten, kann der Nullpunktfehler nicht voll korrigiert werden, was zu einer Verminderung der Meßgenauigkeit des Lichtmeßgerätes führt.

Aufgabe der Erfindung ist es, bei einem Lichtmeßgerät der eingangs genannten Art eine handbetätigte Abschirmvorrichtung so auszubilden, daß die Dauer der Abschirmphase des lichtelektrischen Wandlers unabhängig von der Betätigungsweise durch die Bedienperson einen von der verwendeten Schaltungsanordnung abhängigen Mindestwert nicht unterschreitet.

Die Aufgabe wird durch die im beiliegenden Anspruch 1 gekennzeichnete Erfindung gelöst.

Durch die erfindungsgemäße Ausführung des Lichtmeßgerätes ist die Bewegungsgeschwindigkeit des abschirmenden Elements der Abschirmvorrichtung im in Frage kommenden Zeitbereich weitgehend von der Bewegungsgeschwindigkeit des Betätigungsorgans unabhängig. Dadurch wird eine bei normaler Betätigung nahezu gleichbleibende Dauer der Abschirmphase erreicht. Auch bei besonders schneller Betätigung wird eine durch entsprechende Auslegung der Parameter der an der Bewegung beteiligten Elemente bestimmbare Mindestdauer der Abschirmphase nicht unterschritten.

Ein besonderer Vorteil ergibt sich, wenn die erfindungsgemäße Abschirmvorrichtung bei einem Lichtmeßgerät zur Bestimmung der Farbanteile des Kopierlichtes für einen fotografischen Farbkopiervorgang eingesetzt wird, wobei zwei oder mehre optische Filter nacheinander in den Meßstrahlengang des Lichtmeßgerätes eingeführt werden. Sind diese Filter auf einem Filterträger, beispielsweise einem Filterrad oder einem Filterschlitten mit einem gewissen Abstand zueinander angeordnet, können die zwischen einzelnen Filtern befindlichen Abschnitte des Filterträgers zu Abschirmzwecken herangezogen werden. Dabei wird der ohnedies notwendige Bedienungsschritt des Fortbewegens des Filterträgers von einer Filterposition zur nächsten mit dem Abschirmvorgang kombiniert.

Weitere zweckmäßige Ausführungsformen bzw. Weiterbildungen der Erfindung ergeben sich aus den Unteransprüchen.

Im folgenden wird die Erfindung an einem Ausführungsbeispiel und anhand von Zeichnungen näher erläutert. In den Zeichnungen zeigen:

Fig. 1 eine schematische Darstellung eines erfindungsgemäßen Lichtmeßgerätes zur Bestimmung der drei Grundfarbenanteile des Kopierlichtes für ein fotografisches Farbkopierverfahren;

Fig. 2 das Lichtmeßgerät von Fig. 1 in einem gegenüber dieser geänderten Funktionszustand.

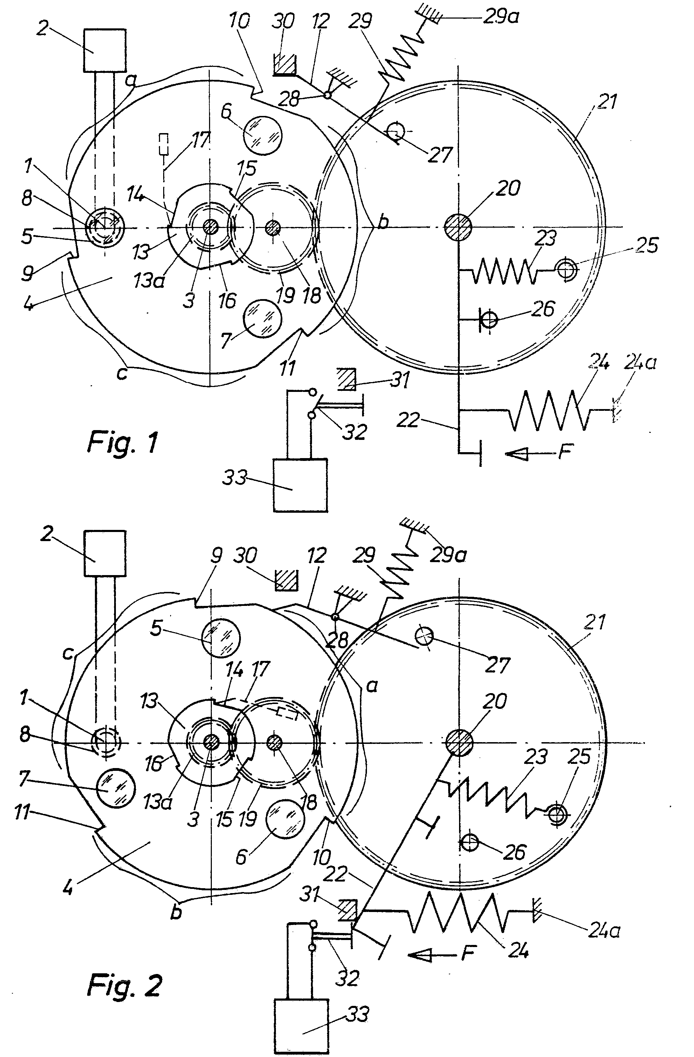

Ein lichtelektrischer Wandler, beispielsweise eine Fotodiode 1, ist mit einer Schaltungsanordnung 2 verbunden, die beispielsweise einer der in der DE-A-2 331 191 oder DE-A-2 353 518 beschriebenen Schaltungsanordnungen entsprechen kann. In der Schaltungsanordnung 2 wird das von der Fotodiode 1 abgegebene Meßsignal verarbeitet und angezeigt. Um auch Meßsignale sehr geringer Intensität mit genügender Genauigkeit verarbeiten zu können, wird der Meßvorgang in zwei Phasen unterteilt: In der ersten Phase ist die Fotodiode 1 vom Lichteinfall abgeschirmt, wobei das entstehende Signal in der Schaltungsanordnung gespeichert wird. Da dieses Signal bei abgeschirmter Fotodiode 1 auftritt, bei der an und für sich überhaupt kein Meßsignal auftreten sollte, handelt es sich also um ein reines Fehlersignal, das hauptsächlich von den temperatur- und alterungsbedingten Änderungen der Offsetspannung des zur Verstärkung des Meßsignals eingesetzten Verstärkers herrührt. Dieses Fehlersignal wird während einer zweiten Phase der Messung, bei der die Fotodiode 1 dem zu messenden Licht ausgesetzt ist, vom dabei entstehenden Meßsignal subtrahiert, so daß das resultierende Signal als weitgehend frei vom Nullpunktfehler angesehen werden kann. Oberhalb der Fotodiode 1 ist ein um eine Achse 3 drehbares Filterrad 4 angebracht, auf dem beispielsweise in gleichen Abständen voneinander drei Farbfilter 5, 6, 7 angeordnet sind, die jeweils nur für Licht einer bestimmten Grundfarbe durchlässig sind. Beispielsweise ist mit der Ziffer 5 ein Blaufilter, mit der Ziffer 6 ein Rotfilter und mit der Ziffer 7 ein Grünfilter bezeichnet. Die zwischen den drei Farbfiltern liegenden Bereiche a, b, c des Filterrades 4 sind lichtundurchlässig und können deshalb die Fotodiode 1 vom einfallenden Meßlicht abschirmen, wenn das Filterrad 4 eine entsprechende Drehlage einnimmt. Das zu messende Licht wird durch eine Eintrittsblende 8 begrenzt, die in einem nicht gezeigten Gehäuse, das zur Aufnahme der in den Figuren schematisch gezeigten Anordnung dient, vorgesehen ist. Am Umfang des Filterrades 4 sind im gleichen Winkelabstand der Filter 5, 6, 7 drei Einsprünge 9, 10, 11 vorgesehen, die mit einer in ihrer Funktion noch näher zu beschreibenden Sperrklinke 12 in Wirkverbindung treten können. Ebenfalls um die Drehachse 3 ist unabhängig vom Filterrad 4 ein Mitnehmerrad 13 drehbar, an dessen Umfang drei im gleichen Winkelabstand wie die Filter zueinander stehende Einschnitte 14, 15, 16 vorgesehen sind, die mit einer am Filterrad 4 befestigten und am Umfang des Mitnehmerrades 13 federnd anliegenden Linke 17 in Wirkverbindung treten können. Mit dem Mitnehmerrad 13 ist ein ebenfalls um die Achse 3 drehbares Ritzel 13a fest verbunden, das mit einem um eine Drehachse 18 drehbaren Zwischenzahnrad 19 in Eingriff steht, welches seinerseits in ein um eine Drehachse 20 drehbares Zahnrad 21 eingreift. Unabhängig von diesem ist um dieselbe Drehachse 20 ein als Betätigungsorgan dienender Hebel 22 drehbar, an dem zwei Federn 23 und 24 angreifen, wobei der zweite Angriffspunkt der Feder 23 durch einen mit dem Zahnrad 21 festverbundenen Zapfen 25 dargestellt wird und der zweite Angriffspunkt 24a der Feder 24 gerätefest ist. In der in Fig. 1 gezeigten Ruhestellung liegt der Hebel 22 an einem am Zahnrad 21 befestigten Anschlag 26 an. Am Zahnrad 21 ist ein weiterer Zapfen 27 angebracht, der in Wirkverbindung mit der Sperrklinke 12 treten kann. In der erwähnten Ruhestellung der Anordnung wird die Sperrklinke 12 entgegen der Wirkung einer Feder 29, die einerseits an der Sperrklinke 12 und anderseits an einem gerätefesten Punkt 29a befestigt ist, gegen einen gerätefesten Anschlag 30 gedrückt. Die Federn 23, 24 und 29 werden auf Zug beansprucht.

Der Hebel 22 ist durch die Bedienperson im Uhrzeigersinn auslenkbar. Dabei wird die Auslenkung durch einen gerätefesten Anschlag 31 begrenzt. In der Nähe dieses Anschlags ist ein elektrischer Schalter 32 angebracht, dessen normalerweise offenen Kontakte bei Erreichen der durch den Anschlag 31 dargestellten Endstellung durch den Hebel 22 geschlossen werden. Die Schaltkontakte des Schalters 32 sind mit einer nicht näher beschriebenen Anzeigeschaltung 33 zur Anzeige eines Funktionszustandes, auf den noch später hingewiesen wird, verbunden.

Die Funktionsweise der beschriebenen Anordnung ist folgende: Im Ruhezustand wird der Hebel 22 durch die im Gegenuhrzeigersinn wirkende Kraft der Feder 24 gegen den Anschlag 26 gezogen. Gleichzeitig wirkt der Zapfen 27 auf die Sperrklinke 12 ein, die ihrerseits gegen den Anschlag 30 gedrückt wird. Dadurch ist die Ruhelage des Zahnrads 21 festgelegt. In diesem Ruhezustand befindet sich die Klinke 17 in eingerasteter Stellung in einem der Ansprünge 14, 15, 16 auf dem Mitnehmerrad 13. Eines der Farbfilter 5, 6, 7 befindet sich dabei zwischen der Fotodiode 1 und der Eintrittsblende 8.

Bei Betätigung des Hebels 22, wird dieser durch die von der Bedienperson ausgeübten Kraft F um seine Drehachse 20 bis zum Erreichen der durch den Anschlag 31 festgelegten Endstellung ausgelenkt. Über die Feder 23 wird das Zahnrad 21 im selben Sinn mitgedreht und treibt über das Zwischenzahnrad 19 und das Ritzel 13a das Mitnehmerrad 13 im Uhrzeigersinn an. Dadurch, daß die Klinke 17 in einem der Einsprünge 14, 15, 16 des Mitnehmerrads 13 eingerastet ist, wird gleichzeitig das Filterrad 4 in dieselbe Drehrichtung mitgenommen. Bei Drehung des Zahnrades 21 wird die Wirkung des Zapfens 27 auf die Sperrklinke 12 allmählich aufgehoben und diese nach einem kleinen Drehwinkel des Zahnrads 21 durch die Kraft der Feder 29 gegen den Umfang des Filterrades 4 gedrückt. Sobald der nächste Einsprung 9, 10 oder 11 sich bei weiterer Drehung des Filterrades 4 der Sperrklinke 12 nähert, folgt diese dem Profil des Filterrades und bringt dieses schließlich bei Erreichen der Sperrkante des Einsprungs zum Stillstand. Die Lage der Einsprünge ist so gewählt, daß sich bei Stillstand des Filterrades 4 jeweils ein Farbfilter im Strahlengang des Meßlichts zwischen der Fotodiode 1 und der Eintrittsblende 8 befindet. Im dargestellten Beispiel sind die Einsprünge 9, 10, 11 im Winkelabstand von 120° jeweils in der Nähe eines der Farbfilter 5, 6, 7 vorgesehen. Denselben Winkelabstand voneinander weisen die Einsprünge 14, 15, 16 auf dem Mitnehmerrad 13 auf.

In Fig. 2 ist eine Zwischenstellung des Filterrades 4 dargestellt, bei der die Sperrklinke 12 an dessen Umfang anliegt. Die Mindestzeit, die für eine Drehung des Filterrades um einen Winkel von 120° benötigt wird, wird durch das Trägheitsmoment des Filterrades 4 und der damit in Eingriff stehenden Übertragungsorgane, durch die bei Auslenkung des Hebels 22 entstehende und von der entsprechenden Federkonstante abhängige Federkraft der Feder 23 und die Reibungsmomente bestimmt. Diese Parameter sind so festgelegt, daß auch bei sehr rascher Auslenkung des Hebels 22 eine genügend lange Zeit für die Abschirmung der Fotodiode 1 gewährleistet ist. Diese Abschirmung erfolgt, wie schon erwähnt, durch die Teile a, b, c des Filterrads 4. Die Zeitdauer, während der sich das Filterrad 4 um einen Winkel von 120° von einer Filterposition zur nächsten dreht, beträgt beispielsweise bei rascher Auslenkung bis zum Anschlag 31 des Hebels 22 etwa 150 ms, wobei die Auslenkzeit des Hebels 22 150 ms unterschreitet.

Während der Messung bleibt der Hebel 22 in seiner ausgelenkten Stellung. Dabei kann dieser durch eine nicht dargestellte Fixiervorrichtung in dieser Lage festgehalten werden. Dabei sind die Kontakte des Endschalters 33 geschlossen, wodurch von der Anzeigeschaltung 33 ein Signal abgegeben wird, das die Meßbereitschaft anzeigt.

Alle für das Funktionieren der Schaltungsanordnung 2 erforderlichen Signale für den Abgleich und die Speicherung des Fehlersignals sowie dessen Subtraktion vom Meßsignal können über Schleifkontakte, die mit entsprechenden Leiterbahnen auf dem Filterrad 4 in Verbindung stehen, gesteuert werden. Diese Steuerung wird hier nicht näher beschrieben, da sie für das Verständnis der Erfindung nicht wesentlich ist.

Wird der Hebel 22 von der Bedienperson freigegeben bzw. dessen Fixiervorrichtung gelöst, zieht die Feder 24 den Hebel 22 in seine Ausgangslage zurück, wobei das Zahnrad 21 über den Anschlag 26 mitgenommen wird. Eine entsprechende Bewegung wird auch auf das Zwischenzahnrad 19 und auf das Ritzel 13a und somit das Mitnehmerrad 13 übertragen. Das Filterrad 4 bleibt jedoch in der erreichten Stellung stehen, da die Klinke 17 entlang des Umfangs des Mitnehmerrads 13 gleitet und bei erfolgter Rückdrehung in den nächsten Einsprung einrastet. Die aus der Klinke 17 und dem Mitnehmerrad 13 bestehende Kombination übernimmt also die Aufgabe eines Freilaufs, der eine Bewegungsübertragung in nur eine Richtung gestattet. Die Lage des Filterrads 4 bleibt während der Rückstellung des Hebels 22 und der damit verbundenen Bewegungen im wesentlichen unverändert, wenn das auf das Filterrad wirksame Reibungsmoment zusammen mit dem entsprechenden Trägheitsmoment höher als das durch das Gleiten der Klinke 17 verursachte Reibungsmoment ist.

Die Verzögerung zwischen der Bewegung eines Betätigungsorgans, wie es im beschriebenen Ausführungsbeispiel durch den Hebel 22 dargestellt wird, und der Blendenbewegung kann auch durch das oben beschriebene äquivalente Mittel erreicht werden. Beispielsweise können ein gegenüber dem dargestellten geänderter Filterträger mit mehr oder weniger Filtern und mit neben dem Filter oder den Filtern befindlichen lichtdämpfenden Zonen, die zur Abschirmung eines lichtelektrischen Wandlers dienen können, und/oder das Betätigungsorgan eine geradlinige oder eine andere gegenüber der beschriebenen geänderte Bewegung ausführen, wobei die Übertragungsorgane den geänderten Bedingungen entsprechend ausgeführt sind. Die notwendigen Änderungen liegen im Kompetenzbereich eines Durchschnittsfachmanns und werden deshalb nicht näher beschrieben.

Außerdem ist die Verzögerung durch das beschriebene äquivalente Mittel auch dann erreichbar, wenn die Blende eine eigene Einheit bildet. Beispielsweise kann die Blende nur aus einem den Teil a des beschriebenen Filterträgers 4 umfassenden Segment bestehen.

**Patentansprüche**

1. Lichtmeßgerät mit einem lichtelektrischen Wandler (1), einer Blendenvorrichtung (a, b, c) zur zeitweiligen Abschirmung des Wandlers vor Lichteinfall und einer Schaltungsanordnung (2) zur Korrektur des Nullpunktfehlers durch Subtraktion des während der Abschirmphase auftretenden Fehlersignals vom darauffolgenden Lichtmeßsignal, gekennzeichnet durch ein von Hand zu betätigendes Betätigungsorgan (22) sowie Antriebsmittel (23, 21, 19, 13a, 13, 17), die bei Betätigung des Betätigungsorgans (22) eine Bewegung der Blendenvorrichtung und damit eine Abschirmung des lichtempfindlichen Wandlers (1) vor Lichteinfall bewirken, deren Dauer oberhalb einer bestimmten Betätigungsgeschwindigkeit des Betätigungsorgans (22) von dieser Geschwindigkeit praktisch unabhängig ist.

2. Lichtmeßgerät nach Anspruch 1, dadurch gekennzeichnet, daß die Antriebsmittel ein zwischen dem Betätigungsorgan (22) und der Blendenvorrichtung (a, b, c) oder einem mit der Blendenvorrichtung in Wirkverbindung stehenden Antriebsübertragungsorgan (13, 13a, 19, 21) wirksames Federlement (23) umfassen.

3. Lichtmeßgerät nach Anspruch 2, dadurch gekennzeichnet, daß die durch die Antriebsmittel (13, 13a, 19, 21, 23) bewirkte Zeitdauer der Abschirmung durch die Auslegung der Trägheitsmomente und/oder der Masse der Antriebsübertragungsorgane (13, 13a, 19, 21) und/oder der Blendenvorrichtung (a, b, c) und der Charakteristik des Federelements (23) bestimmt ist.

4. Lichtmeßgerät nach einem der vorhergehenden Ansprüche, dadurch gekennzeichnet, daß die Blendenvorrichtung (a, b, c) eine bauliche Einheit mit einem ein oder mehrere optische Filter (5, 6, 7) enthaltenden Filterträger (4) bildet.

5. Lichtmeßgerät nach Anspruch 4, dadurch gekennzeichnet, daß der Filterträger ein um eine Drehachse (3) drehbares Filterrad (4) ist.

6. Lichtmeßgerät nach Anspruch 5, dadurch gekennzeichnet, daß das Filterrad (4) eine der Anzahl der optischen Filter (5, 6, 7) entsprechende Zahl von Einsprüngen (9, 10, 11) aufweist, mit denen eine Sperrklinke (12) zur Fixierung bestimmter Drehlagen des Filterrads (4) zusammenwirkt.

7. Lichtmeßgerät nach einem der Ansprüche 5 oder 6, dadurch gekennzeichnet, daß die Bewegung des Betätigungsorgans (22) über das Federelement (23) auf ein Zahnrad (21) übertragen wird, das unmittelbar oder über weitere Antriebsübertragungsorgane (13, 13a, 19) mit dem Filterrad (4) in Wirkverbindung steht.

8. Lichtmeßgerät nach einem der vorhergehenden Ansprüche, dadurch gekennzeichnet, daß zwischen dem Betätigungsorgan (22) und dem Filterträger (4) eine Freilaufvorrichtung (13, 14, 15, 16, 17) vorgesehen ist, die eine Bewegungsübertragung in nur eine Richtung gestattet.

**Claims**

1. Light-measuring apparatus having a photoelectric transducer (1), a shutter (a, b, c) for shielding the transducer from incidence of light for a time and a circuit arrangement (2) for correcting the zero error by subtracting the error signal which occurs during the shielding phase from the subsequent photometric signal, characterised by an actuating mechanism (22) to be actuated by hand, and also drive means (23, 21, 19, 13a, 13, 17), which, when the actuating mechanism (22) is actuated, effect a movement of the shutter and therefore a shielding of the light-sensitive transducer (1) from incidence of light, the duration of which shielding above a certain actuating apeed of the actuating mechanism (22) is practically independent of the speed.

2. Light-measuring apparatus according to claim 1, characterised in that the drive means include a spring element (23) acting between the actuating mechanism (22) and the shutter (a, b, c) or a drive-transmission mechanism (13, 13a, 19, 21) which is in operative connection with the shutter.

3. Light-measuring apparatus according to claim 2, characterised in that duration of the shielding effect produced by the drive means (13, 13a, 19, 21, 23) is determined by the arrangement of the moments of inertia and/or the mass of the drive-transmission mechanism (13, 13a, 19, 21) and/or of the shutter (a, b, c) and the characteristics of the spring element (23).

4. Light-measuring apparatus according to one of the preceding claims, characterised in that the shutter (a, b, c) forms a structural unit with a filter holder (4) containing one or more optical filters (5, 6, 7).

5. Light-measuring apparatus according to claim 4, characterised in that the filter holder is a filter wheel (4) that is rotatable about an axis (3) of rotation.

6. Light-measuring apparatus according to claim 5, characterised in that the filter wheel (4) has recesses (9, 10, 11) the number of which corresponds to the number of optical filters (5, 6, 7) and with which a catch (12) co-operates in order to fix the filter wheel (4) in certain rotational positions.

7. Light-measuring apparatus according to either claim 5 oder 6, characterised in that the movement of the actuating mechanism (22) is transmitted by way of the spring element (23) to a toothed wheel (21) which is in operative connection with the . filter wheel (4) either directly or by way of further drive-transmission mechanism (13, 13a, 19).

8. Light-measuring apparatus according to one of the preceding claims, characterised in that between the actuating mechanism (22) and the filter holder (4) there is provided a free-wheel device (13, 14, 15, 16, 17) which permits a transmission of movement in one direction only.

**Revendications**

1. Appareil de mesure de lumière muni d'un transducteur photoélectrique (1), d'un dispositif de diaphragme (a, b, c) servant à protéger temporairement le transductuer de la lumière incidente, et d'un montage (2) servant à corriger la déviation résiduelle en soustrayant le signal d'erreur apparaissant pendant la phase d'occultation du signal de mesure de lumière qui vient ensuite, caractérisé par un organe d'actionnement (22) pouvant être actionné manuellement et par des moyens d'entraînement (23, 21, 19, 13a, 13, 17) qui, lorsqu'on actionne l'organe d'actionnement (22), causent un mouvement du dispositif de diaphragme et donc une protection du transducteur photoélectrique (1) contre la lumière incidente, protection dont la durée, au-dessus d'une vitesse d'actionnement déterminée de l'organe d'actionnement (22), est pratiquement indépendante de cette vitesse.

2. Appareil de mesure de lumière selon la revendication 1, caractérisé par le fait que les moyens d'entraînement comprennent un élément de ressort (23) agissant entre l'organe d'actionnement (22) et le dispositif de diaphragme (a, b, c) ou un organe de transmission d'entraînement (13, 13a, 19, 21) qui est en coopération avec le dispositif de diaphragme.

3. Appareil de mesure de lumière selon la revendication 2, caractérisé par le fait que la durée de la protection, assurée par les moyens d'entraînement (13, 13a, 19, 21, 23) est déterminée par la fixation des moments d'inertie et/ou de la masse des organes de transmission d'entraînement (13, 13a, 19, 21) et/ou du dispositif de diaphragme (a, b, c) et de la caractéristique de l'élément de ressort (23).

4. Appareil de mesure de lumière selon l'une des revendications précédentes, caractérisé par le fait que le dispositif de diaphragme (a, b, c) forme une unité structurale avec un porte-filtres (4) comportant un ou plusieurs filtres optiques (5, 6, 7).

5. Appareil de mesure de lumière selon la revendication 4, caractérisé par le fait que le porte-filtres est une roue porte-filtres (4) pouvant tourner autour d'un axe de rotation (3).

6. Appareil de mesure de lumière selon la revendication 5, caractérisé par le fait que la roue porte-filtres (4) présente un nombre d'échancrures (9, 10, 11) correspondant au nombre des filtres optiques (5, 6, 7) avec lesquelles un cliquet de blocage (12) coopère pour fixer des positions de rotation déterminées de la roue porte-filtres (4).

7. Appareil de mesure de lumière selon l'une des revendications 5 et 6, caractérisé par le fait que le mouvement de l'organe d'actionnement (22) est transmis par l'intermédiaire de l'élément de ressort (23) à une roue dentée (21) qui est en coopération avec la roue porte-filtres (4), directement ou par l'intermédiaire d'autres organes de transmission d'entraînement (13, 13a, 19).

8. Appareil de mesure de lumière selon l'une des revendications précédentes, caractérisé par le fait qu'entre l'organe d'actionnement (22) et le porte-filtres (4) est prévu un dispositif de roue libre (13, 14, 15, 16, 17) qui ne permet la transmission du mouvement que dans un sens.

0 012 174

Fig. 1

Fig. 2